# EUROPEAN PATENT APPLICATION

(11) **EP 4 738 164 A1**
(43) Date of publication of application: **06.05.2026**
(21) Application number: 24306860.8
(22) Date of filing: 05.11.2024
(51) Int. Cl.: G06F 21/57

(54) **REMOTE ATTESTATION**

(71) Applicant: ARINC Incorporated, Annapolis, MD 21401 (US)
(72) Inventor: LEONARDON, Laurent, Toulouse (FR); MARTINTONI, Davide, Dambel (IT); SENNI, Valerio, Roma (IT); M GRAEFE, Jonathan, Annapolis (US)
(74) Representative: Dehns

(57) **Abstract**

A remote attestation system 200 is provided comprising a relying party 202, a component 213; and a plurality of verifiers 204, 206, 208 arranged to verify a target by receiving evidence from an attester of the target and producing a verification result for the target based on said evidence. The relying party is arranged to cause each of the verifiers to verify the component to produce a plurality of verification results for the component; cause one or more of the verifiers to verify one or more other verifiers so as to produce one or more verification results for each verifier; and determine an attestation result for the component based on the verification results for the component and the verifiers.

## Description

### Technical Field

The present disclosure relates to methods and systems for remote attestation.

### Background

Remote attestation involves a party (the "relying party") relying on a verifier to determine if a target is in a desired state. For instance, an aircraft avionics system wishing to communicate with a newly encountered and/or untrusted ground server may consult a trusted verification server to determine if the ground server is operating as expected and can be trusted.

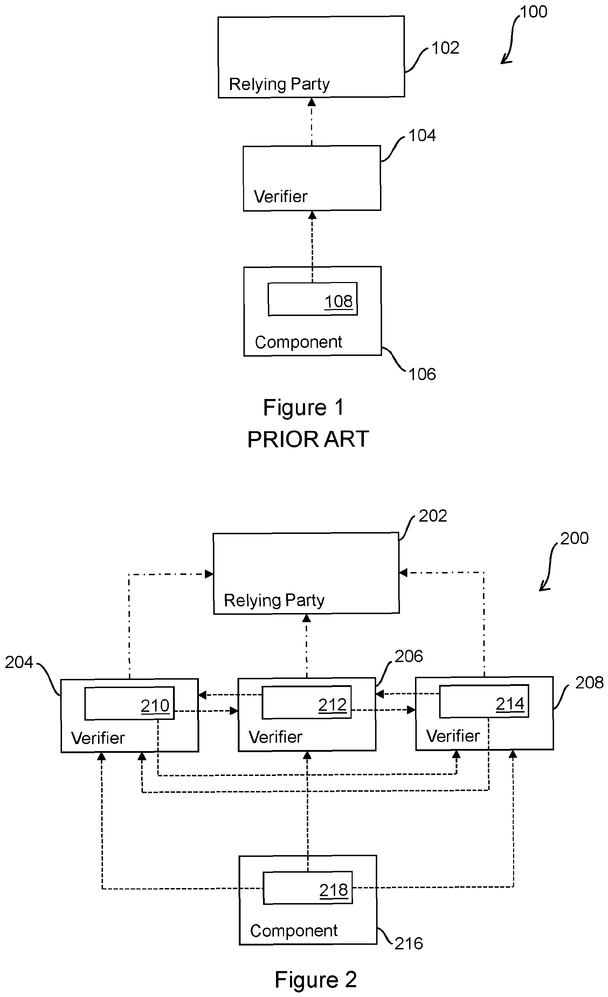

Figure 1 shows a conventional remote attestation system 100. The system 100 comprises a relying party 102, a verifier 104 and a component 106. The system 100 may comprise multiple components that can be evaluated by the same verifier 104 (e.g. multiple different ground servers).

The component 106 comprises an attester 108. To verify the component 106, the verifier 104 requests evidence of the state of the component 106 from the attester 108. The attester 108 obtains evidence from other parts of the component 106, and then compiles and forwards this to the verifier 104. Evidence is illustrated in Figure 1 by a dashed line.

The verifier 104 considers the evidence and determines an attestation result (e.g. confirmation that the component 106 is in the desired state) and reports this to the relying party 102. The result is illustrated in Figure 1 by a dot-dashed line. Depending on the attestation result, the relying party 102 may choose to utilise (i.e. trust) the component 106.

In this remote attestation architecture, the verifier 104 acts as the root of trust in the system. Offloading the verification process to the remote verifier avoids the need for the relying party itself to perform verification processes (e.g. saving energy and/or facilitating updates to verification processes) whilst still providing an accurate assessment of the component 106. Using a remote verifier can also facilitate the collection of evidence and secure storage of expected results for use in future verifications. However, the system depends on the relying party 102 and the verifier 104 communicating over a reliable and trusted communication channel (or being able to authenticate their identities and establish trust), and the attester 108being inherently trusted.

This is not always the case (e.g., when the verifier is subject to an attack) and so this architecture cannot always provide dependable remote attestation. Moreover, in this conventional approach the verifier device 104 represents a single point of failure in the system 100, which can hinder reliability.

An improved approach may be desired.

### Summary

According to a first aspect of the present disclosure there is provided a remote attestation system comprising:
a relying party;
a component; and
a plurality of verifiers arranged to verify a target by receiving evidence from an attester of the target and producing a verification result for the target
based on said evidence;
wherein the relying party is arranged to:
cause each of the verifiers to verify the component to produce a plurality of verification results for the component;
cause one or more of the verifiers to verify one or more other verifiers so as to produce one or more verification results for each verifier; and
determine an attestation result for the component based on the verification results for the component and the verifiers.

According to a second aspect of the present disclosure there is provided a method of remote attestation comprising:
each of a plurality of verifiers verifying a component by receiving evidence from an attester of the component and producing a verification result for the component based on said evidence, to produce a plurality of verification results for the component;
one or more of the plurality of verifiers verifying one or more of the other verifiers by receiving evidence from attesters of the other verifiers and producing a verification result for the other verifiers based on said evidence, so as to produce one or more verification results for each verifier; and
determining an attestation result for the component based on the verification results for the component and the verifiers.

Thus, it will be recognised by those skilled in the art that because the relying party determines the attestation result based on verification feedback from multiple separate verifiers, the system does not rely on a single remote root of trust. This can improve the reliability and accuracy of the system. Using the verifiers to also verify each other (i.e. to seek mutual endorsement) can improve the level of trust in the ultimate attestation result, e.g. mitigating one compromised verifier comprising the whole system.

At least one verification result is produced for each verifier. This may be a single verification result (i.e. from one other verifier), or multiple verification results may be produced for each verifier (i.e. from multiple other verifiers). In some examples, each verifier is caused to verify each other verifier (i.e. so a verification result for each verifier is produced by each other verifier), although this is not essential. In many implementations be sufficiently robust for only a sub-set of the verifiers to verify each of the verifiers (with potentially a different sub-set being used to verify different verifiers).

This federated architecture of multiple verifiers can be scaled as desired. In a set of examples, the remote attestation system comprises at least three verifiers, at least five verifiers, at least ten verifiers or at least 20 verifiers.

The system may be used to verify multiple components. In a set of examples, the remote attestation system comprises a plurality of components (e.g. three or more, five or more, ten or more, 20 or more or 50 or more) and the relying party is arranged to:
cause a set of the verifiers to verify each component to produce a plurality of verification results for the component;
cause one or more of the set of verifiers to verify one or more other verifier in the set so as to produce one or more verification results for each verifier in the set; and
determine an attestation result for each component based on the verification results for the component and the set of verifiers.

In other words, in examples featuring a plurality of components the system determines an attestation result for a given component based on verification results for that component and verification results for the verifiers used to produce these.

In some examples, the set of verifiers for one or more components (e.g. all components) comprises all of the verifiers. In other words the relying party may be arranged to cause all verifiers of the plurality to verify one or more components.

However, in systems with more than two verifiers this may lead to unnecessary complexity. In a set of examples, the set of verifiers for one or more components consists of at least two verifiers but less than a total number of verifiers in the system. In other words, in examples where there are multiple components, not all of the verifiers may be used to verify each component. Different sets of verifiers may be used for different components.

An attester (e.g. of the target component and/or a target verifier) may be arranged to compile the evidence based on information obtained from other parts of the target component or target verifier. The evidence may be generated in response to a challenge from the (verifying) verifier.

The attester is be a trusted element of the target component/verifier (e.g. a segregated hardware and/or software element) that can reliably produce evidence about the target. The attester may be arranged to produce the evidence using one or more cryptographic functions (e.g. a cryptographic hash function). For instance, the evidence may comprise a cryptographic hash generated based on the current operational state of the target component and/or target verifier.

Evidence received by the verifiers may be based on (or include) one or more of: a current content of a memory of the target; a current resource usage of the target; a current state of a processor and/or register of the target; a current execution state of a service on the target; a state of configuration parameters of the target.

A verifier may be arranged to determine a verification result for a target by comparing the evidence to one or more expectations (e.g. comparing one or more values in the evidence or obtained from the evidence to expected values). If the evidence meets expectations, the verification result may be positive (e.g. indicating that the target is in an expected (valid) state). If the evidence does not meet expectations, the verification result may be negative. In some examples the verifier may consider multiple criteria when determining a verification result. It will be appreciated that a verification result may not be a binary output, e.g. comprising a probability of trust in the target. In other words, one or more of the verification results may comprise a measure of confidence that can take more than two values, e.g. more than three values or more than ten values. A verification result may comprise an integer numerical percentage (i.e. any integer value from 0-100%).

The relying party, the verifiers and the component(s) may be provided by software, hardware or a mixture of the two. In a set of examples, the relying party is comprised by a first computing device and the verifiers are comprised by one or more separate computing devices. In some examples each verifier is comprised by a separate computing device (e.g. located physically remotely from each other).

In a set of examples, the relying party is arranged to communicate with at least two of the verifiers over different communication channels (e.g. wireless communication channels that utilise different RF protocols and/or different transceiver hardware). Using different communication channels to communicate with differentverifiers may improve the resilience and trustworthiness of the system.

In a set of examples the relying party is a vehicle-based device (e.g. a device for use on a vehicle such as a train, car or aircraft). The improved attestation functionality of the present system may be particularly useful for devices such as these which regularly move, as this movement is likely to bring the device into contact with many different components that may require attestation (e.g. different ground stations as an aircraft flies to a destination).

Features of any aspect or example described herein may, wherever appropriate, be applied to any other aspect or example described herein. Where reference is made to different examples, it should be understood that these are not necessarily distinct but may overlap.

### Detailed Description

One or more non-limiting examples will now be described, by way of example only, and with reference to the accompanying figures in which:
Figure 1 is a schematic diagram of a prior art remote attestation system;
Figure 2 is a schematic diagram of a remote attestation system according to an example of the present disclosure;
Figure 3 is a schematic diagram of an aircraft implementation of the remote attestation system; and
Figure 4 is a table illustrating example attestation results in the remote attestation system of Figure 2.

Figure 2 shows a remote attestation system 200 comprising a relying party 202, a plurality of verifiers 204, 206, 208 and a component 216. The component 216 comprises an attester 218. Each of the verifiers 204, 206, 208 also features an attester 210, 212, 214.

The relying party 202 can use the remote attestation system 200 to verify the state of the component 216. This may be useful for determining whether the component 216 is operating normally, e.g. to establish a level of trust between the relying party 202 and the component 216.

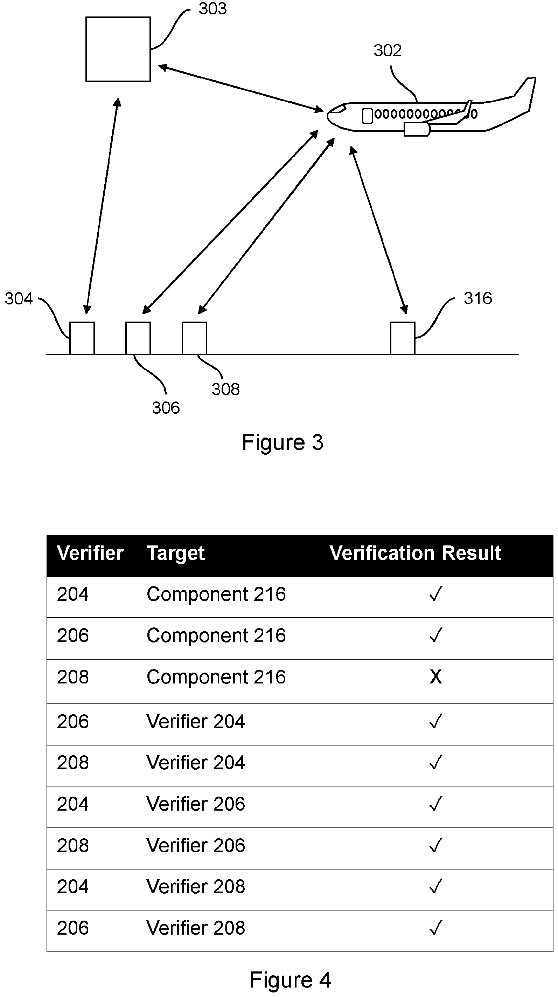

For instance, the relying party 202 may comprise an avionics system on an aircraft 302 as shown in Figure 3. As the aircraft 302 travels, the avionics system may need to exchange data with a newly-encountered and thus potentially untrusted ground server 316. Before exchanging said data the aircraft avionics system may wish to establish that the ground server 316 is operating normally. To do so it employs three additional ground servers 304, 306, 308 which act as verifiers. The aircraft 302 communicates with the newly-encountered ground server 316 and two of the additional ground servers 306, 308 via direct air-to-ground RF communication channels, although it will be appreciated that other communication mechanisms may be used in other examples, e.g. with the different communication channels being established on top of the same air-ground link. The aircraft 302 communicates with the other additional ground server 304 via a satellite 303.

To verify the status of the component 216 (e.g. the ground server 316), the relying party 202 (e.g. the avionics system on the aircraft 302) contacts the plurality of verifiers 204, 206, 208 (e.g. the ground servers 304, 306, 308) and requests that they verify the state of the component 216.

To verify the component 216, each of the verifiers 204, 206, 208 collects evidence of the state of the component from the attester 218. Evidence is illustrated in Figure 2 by dashed lines. The evidence may be produced and forwarded by the attester 218 directly from the verifiers 204, 206, 208 (e.g. in response to a challenge from each verifier), or it may be sent via the relying party 202 (e.g. in response to a request from the relying party 202). In the example shown in Figure 3 the parties may all communicate directly with each other (i.e. over separate communication channels), or some or all communication mayhappen via the aircraft 302.

Each of the verifiers 204, 206, 208 reviews the evidence from the attester 218 and determines independently the state of the component 216 based on the evidence. For instance, each verifier may determine based on the evidence if the component 216 is in a normal operational state or if the component 216 is operating abnormally. Each verifier 204, 206, 208 produces a verification result for the component 216 and sends this to the relying party 202 (e.g. a positive result if the component 216 appears to be in a normal operational state or a negative result if the component 216 appears to be in an abnormal state). Verification results are illustrated in Figure 2 by dot-dashed lines.

To improve the reliability and accuracy of the attestation system 200, each of the verifiers 204, 206, 208 also verifies the states of other verifiers 204, 206, 208. Each of the verifiers 204, 206, 208 collects evidence from the attesters 210, 212, 214 of the other two verifiers 204, 206, 208. As with the evidence from the component 216, this evidence may be sent directly or via the relying party 202. Each verifier 204, 206, 208 produces two further verification results for the other two verifiers 204, 206, 208 and sends these to the relying party 202.

Each verifier 204, 206, 207 thus provides three verification results to the relying party 202: one for the component 216 and two for the other verifiers 204, 206, 208. In other examples not all verifiers are verified by all other verifiers. These verification results are all sent to the relying party 202. An example of these verification results is shown in Figure 4, where the result is a tick indicating that the target is in an expected state and a cross indicating that the target is in an unexpected state. It will be appreciated that in other examples the verification results may be non-binary, e.g. a probability of the target being in an expected state.

The relying party 202 then uses all of these verification results to determine an attestation result for the component 216.

In simple situations, where all elements of the system 200 are operating normally, all verification results should be positive (i.e. ticks). If this is the case, the relying party 202 can quickly determine the attestation result to be positive, because all of the verifiers indicate that the component is operating as expected, and the verifiers have been mutually endorsed.

However, if one or more of the verification results is negative (i.e. a cross), the relying party 202 may apply one or more rules to the set of verification results to determine the attestation result. In the example shown in Figure 4, the third verifier 208 has provided a negative verification result for the component 216, but all other verification results are positive. In this example, the relying party 202 may determine that the attestation result for the component 216 is positive because a majority of the verification results for the component 216 are positive.

In more complex examples, e.g. where one of the verification results for a verifier 204, 206, 208 is negative, the relying party 202 may apply additional rules. For instance the relying party 202 may weight results from a given verifier based on verification results for that verifier (e.g. with the results from verifiers having many positive verification results being weighted more highly than those having many negative verification results).

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A remote attestation system comprising:
a relying party;
a component; and
a plurality of verifiers arranged to verify a target by receiving evidence from an attester of the target and producing a verification result for the target
based on said evidence;
wherein the relying party is arranged to:
cause each of the verifiers to verify the component to produce a plurality of verification results for the component;
cause one or more of the verifiers to verify one or more other verifiers so as to produce one or more verification results for each verifier; and
determine an attestation result for the component based on the verification results for the component and the verifiers.

2. The remote attestation system of claim 1, comprising at least three verifiers.

3. The remote attestation system of claim 1 or 2, wherein the relying party is arranged to cause one or more of the verifiers to verify one or more other verifiers so as to produce multiple verification results for each verifier.

4. The remote attestation system of any preceding claim, comprising a plurality of components, wherein the relying party is arranged to:
cause a set of the verifiers to verify each component to produce a plurality of verification results for the component;
cause one or more of the set of verifiers to verify one or more other verifier in the set so as to produce one or more verification results for each verifier in the set; and
determine an attestation result for each component based on the verification results for the component and the set of verifiers.

5. The remote attestation system of claim 4, wherein the set of verifiers for one or more components consists of at least two verifiers but less than a total number of verifiers in the system.

6. The remote attestation system of any preceding claim, wherein the evidence received by the verifiers is based on or includes one or more of: a current content of a memory of the target; or a current resource usage of the target; a current state of a processor and/or register of the target; a current execution state of a service on the target; a state of configuration parameters of the target.

7. The remote attestation system of any preceding claim, wherein one or more verifiers is arranged to determine a verification result for a target by comparing the evidence to one or more expectations.

8. The remote attestation system of any preceding claim, wherein one or more of the verification results comprises a measure of confidence that can take more than two values.

9. The remote attestation system of any preceding claim, wherein the relying party is comprised by a first computing device and the verifiers are comprised by one or more separate computing devices.

10. The remote attestation system of any preceding claim, wherein the relying party is arranged to communicate with at least two of the verifiers over different communication channels.

11. The remote attestation system of any preceding claim, wherein each verifier is comprised by a separate computing device.

12. The remote attestation system of claim 11, wherein the verifiers are located physically remotely from each other.

13. The remote attestation system of any preceding claim, wherein the relying party is a vehicle-based device.

14. The remote attestation system of any preceding claim, wherein the relying party is a device for use on an aircraft.

15. A method of remote attestation comprising:
each of a plurality of verifiers verifying a component by receiving evidence from an attester of the component and producing a verification result for the component based on said evidence, to produce a plurality of verification results for the component;
one or more of the plurality of verifiers verifying one or more of the other verifiers by receiving evidence from attesters of the other verifiers and producing a verification result for the other verifiers based on said evidence, so as to produce one or more verification results for each verifier; and
determining an attestation result for the component based on the verification results for the component and the verifiers.
